# EUROPÄISCHE PATENTSCHRIFT

(11) **EP 1 357 374 B1**
(45) Veröffentlichungstag und Bekanntmachung des Hinweises auf die Patenterteilung: **05.05.2010**
(21) Anmeldenummer: 02009082.5
(22) Anmeldetag: 24.04.2002
(51) Int. Cl.: G01M 3/36

(54) **Verfahren zur Prüfung einer Vakuumverpackung**
Procedure for testing a vacuum package
Procédé d'essai d'un emballage sous vide

(43) Veröffentlichungstag der Anmeldung: 29.10.2003
(73) Patentinhaber: Ulixes Robotersysteme GmbH, 70736 Fellbach (DE)
(72) Erfinder: Nagler, Peter, 70736 Fellbach (DE)
(74) Vertreter: Wasmuth, Rolf

(56) Entgegenhaltungen:
- DE-U- 29 709 635
- US-A- 2 383 936
- US-A- 3 998 091
- US-A- 5 111 684

## Beschreibung

Die Erfindung betrifft ein Verfahren zur Prüfung einer Vakuumverpackung.

Vakuumverpackungen werden durch Sichtprüfung auf Dichtigkeit überprüft. So liegt bei vakuumverschweißter Packung bei undichter Einschweißung die Verpackung nicht eng am verpackten Gut an; die Verpackung kann vom Warengut abgehoben werden. Auch durch das Eindringen von Luft können Vakuumverpackungen instabil werden.

Die DE 297 09 635 U1 offenbart eine Vorrichtung zur Überprüfung der Dichtigkeit von hermetisch abgeschlossenen Verpackungen, bei der eine an eine Unterdruckquelle angeschlossene Saugglocke auf die Verpackung aufgesetzt wird. Der Rand der Saugglocke liegt dichtend an der Verpackung an. In der Saugglocke sind Abstandssensoren angeordnet, die die Position der Packungswand bei anliegendem Unterdruck überwachen. Alternativ kann ermittelt werden, ob die Packungswand sich beim Anlegen des Unterdrucks an ein in die Saugglocke ragendes Absaugrohr anlegt. Hierzu wird der Druck innerhalb der Saugglocke gemessen.

Die US 2,383,936 zeigt ein Verfahren zur Ermittlung der Dichtheit für mit einem Deckel verschlossene Behälter. Aufgrund des Unterdrucks im Behälter ist der Deckel nach innen gewölbt. Zur Überprüfung der Dichtheit wird eine Saugeinrichtung aufgesetzt, die außenliegende Eintrittsöffnungen und eine mittige Absaugöffnung besitzt. Über einen Hebelmechanismus wird ausgewertet, ob Luft aus den außenliegenden Eintrittsöffnungen zur mittigen Saugöffnung strömen kann, der Deckel also nach innen gewölbt ist, oder ob kein Luftübertritt stattfindet, der Deckel also an der Saugeinrichtung anliegt.

Der Erfindung liegt die Aufgabe zugrunde, ein Verfahren zur Prüfung von Vakuumverpackungen zu schaffen, das einfach durchgeführt werden kann.

Diese Aufgabe wird durch ein Verfahren mit den Merkmalen des Anspruchs 1 gelöst.

Bei intakter Vakuumverpackung liegt die Verpackung, üblicherweise eine Verpackungsfolie, dicht an dem verpackten Gut an. Bei beschädigten Vakuumverpackungen liegt die Verpackungsfolie nicht dicht an dem Verpackungsgut an, da durch die beschädigte Stelle der Verpackung Umgebungsluft eindringen kann. Wird die Vakuumverpackung mit einem Oberflächenabschnitt zur Anlage an eine Anlagefläche einer Saugeinrichtung gebracht und an der Saugeinrichtung ein Unterdruck erzeugt, so wird die Vakuumverpackung an die Anlagefläche der Saugeinrichtung angesaugt. Ist die Vakuumverpackung intakt, so bleiben zwischen der Verpakkung und der Anlagefläche der Saugeinrichtung Zwischenräume bestehen. Kann in die Verpackung aufgrund von Beschädigungen Luft eindringen, so wird die Verpackungsfolie an die Anlagefläche der Saugeinrichtung angesaugt und verschließt diese weitgehend. Durch Messung einer dem Luftstrom durch die Anlagefläche zugeordneten Betriebsgröße und Vergleich der Betriebsgröße mit mindestens einem Grenzwert kann auf einfache Weise festgestellt werden, ob eine Vakuumverpackung an der Anlagefläche anliegt, ob die Vakuumverpackung dicht ist oder ob Luft in die Verpackung eindringen kann. Ein entsprechender Zustand wird der Verpackung zugeordnet. Das Verfahren benötigt keine aufwendigen Einrichtungen, sondern kann mit einfachen Mitteln durchgeführt werden. Das Verfahren kann zur Prüfung der Dichtheit einer Verpackung oder zur Überprüfung, ob eine Verpackung an der Anlagefläche anliegt, verwendet werden. Beide Prüfungen können bei Vergleich mit mehreren Grenzwerten gleichzeitig durchgeführt werden.

Vorteilhaft weist die Vakuumverpackung in dem Oberflächenabschnitt eine mindestens teilweise profilierte Oberfläche auf und die Anlagefläche ist weitgehend eben ausgebildet. Die profilierte Oberfläche der Vakuumverpackung ermöglicht die Durchführung des Verfahrens mit einer üblichen Saugeinrichtung mit ebener Oberfläche. Zur Ermöglichung der Durchführung des Verfahrens bei Vakuumverpackungen mit ebener Oberfläche kann zweckmäßig die Anlagefläche eine Profilierung aufweisen. Vorteilhaft wird die Betriebsgröße mit einem unteren Grenzwert verglichen. Bei intakter Vakuumverpackung bleiben Zwischenräume zwischen Anlagefläche und Oberflächenabschnitt bestehen. Der Luftstrom durch die Anlagefläche erreicht bei Betrieb der Saugreinigung einen konstanten Wert. Bei beschädigter Vakuumverpackung wird die Verpackung an die Anlagefläche angesaugt, wodurch der Zwischenraum verkleinert wird. Der Luftstrom durch die Anlagefläche nimmt somit ab. Bei Unterschreiten eines unteren Grenzwerts für den Luftstrom ist die Vakuumverpackung beschädigt. Vorteilhaft wird die Betriebsgröße mit einem oberen Grenzwert verglichen. Ist der Luftstrom durch die Anlagefläche der Saugeinrichtung sehr groß, so liegt keine Vakuumverpackung an der Anlagefläche an.

Zweckmäßig wird als Betriebsgröße der Druck stromab der Anlagefläche gemessen. Der Druck hinter der Anlagefläche ist mit einfachen Mitteln meßbar und läßt direkte Rückschlüsse auf den Luftstrom durch die Anlagefläche zu, da die Saugeinrichtung hinter der Anlagefläche einen Unterdruck erzeugt. Fällt der Druck hinter der Anlagefläche stark ab, so ist der Luftstrom durch die Anlagefläche gering und die Vakuumverpackung beschädigt. Es kann jedoch zweckmäßig sein, daß als Betriebsgröße der Druckverlauf gemessen wird. Insbesondere bei kleinen Beschädigungen der Vakuumverpackung wird die Verpackung nicht sofort bei Anlegen eines Unterdrucks an der Anlagefläche anliegen, sondern sich dieser langsam nähern. Der Abfall des Druckes hinter der Anlagefläche zeigt somit an, daß die Vakuumverpackung beschädigt ist, da bei intakter Vakuumverpackung der Druck stromab der Anlagefläche ein konstantes Niveau besitzt.

Aufgrund des benötigten Zeitbedarfs, bis die Vakuumverpackung vollständig an der Anlagefläche anliegt, ist vorgesehen, daß die Betriebsgröße nach Ablauf einer vorgegebenen Zeit nach Anlage der Vakuumverpackung an die Saugeinrichtung gemessen wird. Zweckmäßig wird die Betriebsgröße in einem stromab der Anlagefläche gebildeten Saugraum gemessen. Vorteilhaft ist die Saugeinrichtung ein Sauggreifer, mit dem die Vakuumverpackung gegriffen wird. Derartige Sauggreifer sind bei Robotern in automatisierten Anlagen verwendet und können einfach und kostengünstig integriert werden. Insbesondere wird das Verfahren in Kombination mit einem Transportschritt durchgeführt. Wird für den Transportschritt eine Saugeinrichtung verwendet, ist das Verfahren in bestehenden Anlagen ohne zusätzlichen Aufwand durchführbar. Die zur Durchführung des Transportschritts benötigte Zeit kann gleichzeitig zur Prüfung der Verpackung verwendet werden. Aufgrund des Prüfergebnisses kann vorteilhaft der Transportschritt gesteuert werden, so daß beispielsweise beschädigte Verpackungen direkt aussortiert werden. Der Transportschritt wird dabei zweckmäßig von einem Handlingsroboter ausgeführt.

Ein Ausführungsbeispiel der Erfindung wird im folgenden anhand der Zeichnung erläutert. Es zeigen:
- Fig. 1: eine Saugeinrichtung mit intakter Vakuumverpackung,
- Fig. 2: eine Saugeinrichtung mit beschädigter Vakuumverpackung,
- Fig. 3: eine Saugeinrichtung ohne angelegte Vakuumverpackung,
- Fig. 4: eine schematische Darstellung des Ablaufs des Verfahrens.

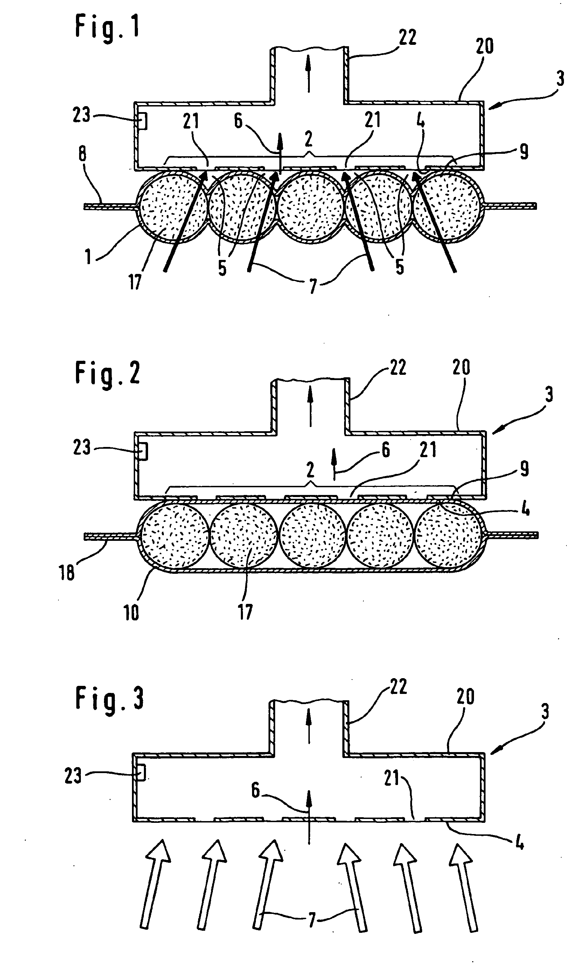

In Fig. 1 ist eine Saugeinrichtung 3 schematisch dargestellt, die eine ebene Anlagefläche 4 aufweist. Die Anlagefläche 4 bildet eine Wand eines Saugraumes 20 und weist Saugöffnungen 21 auf. An der Anlagefläche 4 liegt eine Vakuumverpackung 1 über einen Oberflächenabschnitt 2 an. Die Oberfläche 9 der Vakuumverpackung 1 liegt dicht am Verpackungsgut 17 an. Die Vakuumverpackung 1 kann beispielsweise einen umlaufenden Schweißrand 8 aufweisen, der zwei Folienabschnitte dicht miteinander verbindet. Aufgrund der dichten Verbindung bleibt die Verpackung 1 in dichter Anlage am Verpackungsgut 17. Das Verpackungsgut 17 besteht aus fünf Einzelkörpern mit zylindrischem Querschnitt, wie beispielsweise Würste. Aufgrund der Profilierung der Oberfläche 9 sind zwischen der Vakuumverpakkung 1 und der Anlagefläche 4 der Saugeinrichtung 3 Zwischenräume 5 gebildet. Durch die Zwischenräume 5 strömt bei Erzeugung eines Unterdrucks stromab der Anlagefläche 4 ein Luftstrom 7 durch die Zwischenräume 5 und die Anlagefläche 2 in der Strömungsrichtung 6. Der Luftstrom stellt sich bei konstantem erzeugtem Unterdruck auf ein konstantes Niveau ein. Der Unterdruck im Saugraum 20 wird über den in den Saugraum 20 mündenden Sauganschluß 22 aufgebaut. Der im Saugraum 20 angeordnete Drucksensor 23 mißt den sich einstellenden Druck im Saugraum 20.

In Fig. 2 ist die Saugeinrichtung 3 mit einer beschädigten Vakuumverpackung 10 dargestellt. Die Vakuumverpackung 10 weist einen Schweißrand 18 auf, durch den Verpackungsgut 17 zwischen zwei Folienabschnitten eingeschlossen ist. Da die Vakuumverpackung 10 eine Beschädigung aufweist, kann Umgebungsluft ins Innere der Vakuumverpackung 10 eindringen. Die Vakuumverpakkung 10 liegt nicht dicht am Verpackungsgut 17 an. Bei Anlegen eines Unterdrucks in Strömungsrichtung 6 gesehen stromab der Anlagefläche 4 wird die Oberfläche 9 der Vakuumverpackung 10 über den gesamten Oberflächenabschnitt 2 an die Anlagefläche 4 gesaugt. Die Vakuumverpackung 10 schließt somit die Anlagefläche 4 im Anlagebereich dicht ab. Es kann keine Luft mehr durch die Anlagefläche 4 strömen. Der Druck im Saugraum 20, der vom Drucksensor 23 gemessen wird, sinkt aufgrund des über den Sauganschluß 22 erzeugten Unterdrucks.

In Fig. 3 ist die Saugeinrichtung 3 ohne eine Vakuumverpackung dargestellt. Durch die Anlagefläche 4 kann entlang der Strömungsrichtung 6 der Luftstrom 7 ungehindert durch die Anlagefläche 4 in den Sauganschluß 22 strömen. Verglichen mit einer an der Anlagefläche 4 anliegenden Vakuumverpackung wie in Fig. 1 dargestellt, stellt sich ein höherer Luftstrom 7 ein.

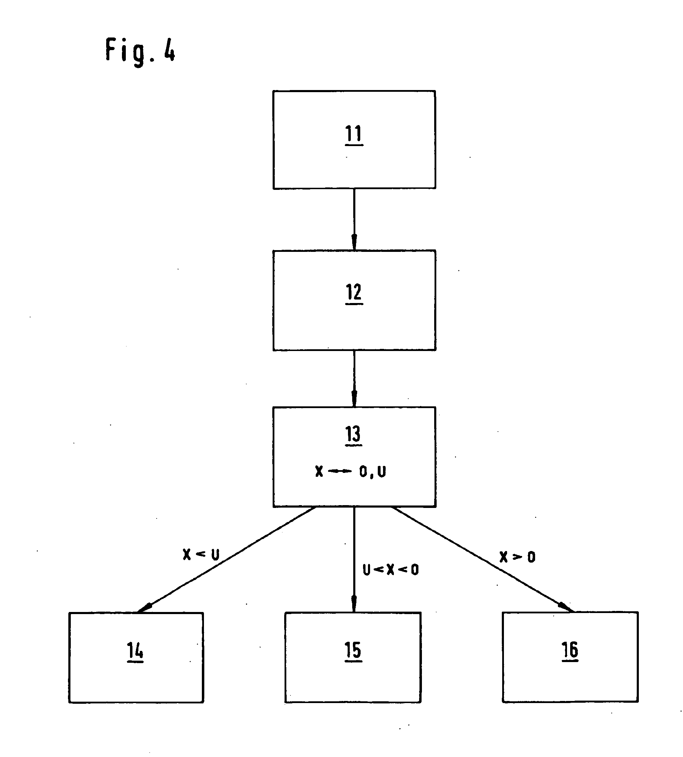

In Fig. 4 ist der Ablauf des Verfahrens zur Prüfung einer Vakuumverpackung schematisch dargestellt. Im Verfahrensschritt 11 wird eine Vakuumverpackung mit einem Oberflächenabschnitt an einer Anlagefläche einer Saugeinrichtung zur Anlage gebracht. Dabei kann die Anlagefläche und/oder der Oberflächenabschnitt der Vakuumverpackung eine Profilierung aufweisen, so daß sich zwischen beiden mindestens ein Zwischenraum ergibt. Im Verfahrensschritt 12 wird eine Betriebsgröße x gemessen, die dem Luftstrom durch die Anlagefläche beispielsweise proportional ist. Die Betriebsgröße x kann dabei der Druck oder der Druckverlauf stromab der Anlagefläche sein. Die Betriebsgröße x kann nach Ablauf einer vorgegebenen Zeit nach dem Verfahrensschritt 11 oder während einer bestimmten Zeitspanne gemessen werden. Die Betriebsgröße x wird dann im Verfahrensschritt 13 mit einem oberen Grenzwert o und einem unteren Grenzwert u verglichen. Ist die Betriebsgröße x kleiner als der untere Grenzwert u, so wird der Vakuumverpackung der Zustand 14 zugewiesen, wonach die Vakuumverpackung beschädigt ist. Ist die Betriebsgröße x größer als der obere Grenzwert u, so ergibt sich der Zustand 16, wonach an der Anlagefläche der Saugeinrichtung keine Verpackung anliegt. Liegt die Betriebsgröße x zwischen dem unteren Grenzwert u und dem oberen Grenzwert o, so wird der Zustand 15 zugewiesen, der besagt, daß die Vakuumverpackung intakt ist.

Wird als Betriebsgröße x der Druckverlauf ermittelt, so ändern sich oberer Grenzwert o und unterer Grenzwert u entsprechend. Es kann jedoch auch zweckmäßig sein, als Grenzwert eine Kombination aus Druckverlauf und absolutem Wert des Drucks zu verwenden. Das Verfahren wird vorteilhaft in Kombination mit einem Transportschritt, insbesondere an einem Handlingsroboter durchgeführt. Zweckmäßig ist die Saugeinrichtung ein Sauggreifer oder Vakuumgreifer. Je nach Zustand, der der Verpackung zugewiesen wurde, kann eine unterschiedliche Aktion ausgelöst werden: bei dem Zustand 15, wonach die Verpackung intakt ist, kann die Vakuumverpackung den folgenden Prozeßschritten zugeführt werden. Liegt der Zustand 14 vor, wonach die Vakuumverpackung beschädigt ist, kann die Vakuumverpackung aussortiert werden. Bei Vorliegen des Zustands 16, wonach keine Verpackung gegriffen ist, kann die folgende Verpackung aufgenommen werden.

## Patentansprüche

1. Verfahren zur Prüfung einer Vakuumverpackung (1, 10), bei dem die Verpackung (1, 10) mit mindestens einem Oberflächenabschnitt (2) an mindestens einer Anlagefläche (4) einer Saugeinrichtung (3) zur Anlage gebracht wird, wobei die Anlagefläche (4) und/ oder der Oberflächenabschnitt (2) eine Profilierung aufweist, so dass sich zwischen beiden mindestens ein Zwischenraum ergibt, wobei die Saugeinrichtung (3) im Betrieb in Strömungsrichtung (6) gesehen hinter der Anlagefläche (4) einen Unterdruck aufbaut, und eine dem Luftstrom (7) durch die Anlagefläche (4) zugeordnete Betriebsgröße (x) gemessen wird,
**dadurch gekennzeichnet, dass** die Betriebsgröße (x) mit einem oberen Grenzwert (o) und mit einem unteren Grenzwert (u) verglichen wird und der Vakuumverpackung (1, 10) bei Überschreiten des unteren Grenzwertes (u) und Unterschreiten des oberen Grenzwertes (o) ein erster Zustand zugeordnet wird, wonach die Vakuumverpackung intakt ist, bei Unterschreiten des unteren Grenzwertes (u) ein zweiter Zustand zugeordnet wird, wonach die Vakuumverpackung (1, 10) beschädigt ist und bei Überschreiten des oberen Grenzwertes (o) ein dritter Zustand zugewiesen wird, wonach keine Vakuumverpackung (1, 10) an der Anlagefläche (4) der Saugeinrichtung (3) angeordnet ist.

2. Verfahren nach Anspruch 1,
**dadurch gekennzeichnet, daß** die Vakuumverpackung (1, 10) in dem Oberflächenabschnitt (2) eine mindestens teilweise profilierte Oberfläche (9) aufweist und die Anlagefläche (4) weitgehend eben ausgebildet ist.

3. Verfahren nach Anspruch 1 oder 2,
**dadurch gekennzeichnet, daß** als Betriebsgröße (x) der Druck stromab der Anlagefläche (4) gemessen wird.

4. Verfahren nach einem der Ansprüche 1 bis 3,
**dadurch gekennzeichnet, daß** die Betriebsgröße (x) nach Ablauf einer vorgegebenen Zeit nach Anlage der Vakuumverpackung (1, 10) an die Saugeinrichtung (3) gemessen wird.

5. Verfahren nach Anspruch 1 oder 2,
**dadurch gekennzeichnet, daß** als Betriebsgröße (x) der Druckverlauf gemessen wird.

6. Verfahren nach einem der Ansprüche 1 bis 5,
**dadurch gekennzeichnet, daß** die Betriebsgröße (x) in einem stromab der Anlagefläche (4) gebildeten Saugraum (20) gemessen wird.

7. Verfahren nach einem der Ansprüche 1 bis 6,
**dadurch gekennzeichnet, daß** die Saugeinrichtung (3) ein Sauggreifer ist, mit dem die Vakuumverpackung (1, 10) gegriffen wird.

8. Verfahren nach einem der Ansprüche 1 bis 7,
**dadurch gekennzeichnet, daß** das Verfahren in Kombination mit einem Transportschritt durchgeführt wird.

## Claims

1. Method for testing a vacuum packaging (1, 10), wherein at least one surface section (2) of the vacuum packaging (1, 10) is brought into contact with at least one contact surface (4) of a suction device (3), the contact surface (4) and/or the surface section (2) having a profiling resulting in at least one gap between the two, wherein the suction device (3) in operation generates a vacuum behind the contact surface (4) as viewed in the direction of flow (6) and wherein an operating variable (x) assigned to the air flow (7) through the contact surface (4) is measured,
**characterised in that** the operating variable (x) is compared to an upper limit (o) and a lower limit (u) and **in that**, if the lower limit (u) is exceeded and the upper limit (o) is fallen below, a first state is assigned to the vacuum packaging (1, 10), according to which the vacuum packaging is undamaged, if the lower limit (u) is fallen below, a second state is assigned, according to which the vacuum packaging (1, 10) is damaged, and if the upper limit value (o) is exceeded, a third state is assigned, according to which there is no vacuum packaging (1, 10) on the contact surface (4) of the suction device (3).

2. Method according to claim 1,
**characterised in that** the vacuum packaging has an at least partially profiled surface (9) in the surface section (2) and the contact surface (4) is largely flat.

3. Method according to claim 1 or 2,
**characterised in that** the pressure downstream of the contact surface (4) is measured as an operating variable (x).

4. Method according to any of claims 1 to 3,
**characterised in that** the operating variable (x) is measured when a preset time has elapsed since the vacuum packaging (1, 10) has been brought into contact with the suction device (3).

5. Method according to claim 1 or 2,
**characterised in that** the pressure pattern is measured as an operating variable (x).

6. Method according to any of claims 1 to 5,
**characterised in that** the operating variable (x) is measured in a suction chamber (20) formed downstream of the contact surface (4).

7. Method according to any of claims 1 to 6,
**characterised in that** the suction device (3) is a suction gripper which grips the vacuum packaging (1, 10).

8. Method according to any of claims 1 to 7,
**characterised in that** the method is implemented in combination with a conveying step.

## Revendications

1. Procédé pour contrôler un emballage sous vide (1, 10), selon lequel l'emballage (1, 10) est appliqué avec au moins une partie de surface (2) contre au moins une surface d'application (4) d'un dispositif d'aspiration (3), étant précisé que la surface d'application (4) et/ou la partie de surface (2) présentent un profilage, de telle sorte qu'il se forme entre les deux au moins un espace intermédiaire, que le dispositif d'aspiration (3) forme en fonctionnement une dépression derrière la surface d'application (4), si on considère le sens d'écoulement (6), et qu'on mesure une grandeur de fonctionnement (x) associée au courant d'air (7) qui traverse la surface d'application (4),
**caractérisé en ce que** la grandeur de fonctionnement (x) est comparée à une valeur limite supérieure (o) et à une valeur limite inférieure (u) et un premier état selon lequel l'emballage sous vide est intact est associé audit emballage sous vide (1, 10) en cas de valeur supérieure à la valeur limite inférieure (u) et en cas de valeur inférieure à la valeur limite supérieure (o), tandis qu'un deuxième état selon lequel l'emballage sous vide (1, 10) est endommagé est associé en cas de valeur inférieure à la valeur limite inférieure (u), et qu'un troisième état selon lequel aucun emballage sous vide (1, 10) n'est disposé contre la surface d'application (4) du dispositif d'aspiration (3) est attribué en cas de valeur supérieure à la valeur supérieure (o).

2. Procédé selon la revendication 1,
**caractérisé en ce que** l'emballage sous vide (1, 10) présente dans la partie de surface (2) une surface (9) au moins partiellement profilée, et la surface d'application (4) est quasiment plane.

3. Procédé selon la revendication 1 ou 2,
**caractérisé en ce qu'**on mesure comme grandeur de fonctionnement (x) la pression en aval de la surface d'application (4).

4. Procédé selon l'une des revendications 1 à 3,
**caractérisé en ce que** la grandeur de fonctionnement (x) est mesurée après écoulement d'une durée prédéfinie, après l'application de l'emballage sous vide (1, 10) contre le dispositif d'aspiration (3).

5. Procédé selon la revendication 1 ou 2,
**caractérisé en ce qu'**on mesure comme grandeur de fonctionnement (x) la courbe de pression.

6. Procédé selon l'une des revendications 1 à 5,
**caractérisé en ce que** la grandeur de fonctionnement (x) est mesurée dans un espace d'aspiration (20) formé en aval de la surface d'application (4).

7. Procédé selon l'une des revendications 1 à 6,
**caractérisé en ce que** le dispositif d'aspiration (3) est constitué par une ventouse avec laquelle l'emballage sous vide (1, 10) est saisi.

8. Procédé selon l'une des revendications 1 à 7,
**caractérisé en ce qu'**il est mis en oeuvre en combinaison avec une phase de transport.
